Europäisches Patentamt

European Patent Office

Office européen des brevets

(11) Numéro de publication: **0 237 389**
**A1**

# DEMANDE DE BREVET EUROPEEN

(21) Numéro de dépôt: 87400307.2

(51) Int. Cl.⁴: **A 61 C 9/00**

(22) Date de dépôt: 06.02.87

(30) Priorité: 11.02.86 FR 8601934

(43) Date de publication de la demande:
16.09.87 Bulletin 87/38

(84) Etats contractants désignés:
BE CH DE ES GB IT LI

(71) Demandeur: **Arnaud, Daniel**
**41 rue Chambre de l'Edit**
**F-81100 Castres (FR)**

(72) Inventeur: **Arnaud, Daniel**
**41 rue Chambre de l'Edit**
**F-81100 Castres (FR)**

(54) **Dispositif de prise d'empreinte sous pression constante.**

(57) La présente invention concerne un dispositif de prise d'empreinte dentaire du type comprenant un porte empreinte (I) caractéristique en ce que son manche (2) contient un réservoir destiné à reçevoir le matériau à empreinte et à l'injecter grâce à un piston (4) via l'intrados de l'appareil (5) sur les surfaces mucco-dentaires. Selon l'invention, ce système permet d'améliorer la précision et la définition des détails des empreintes dentaires par la mise sous pression du matériau d'empreinte qui fuse dans tous les détails des préparations sus et sous gingivales ..

EP 0 237 389 A1

**Description**

## DISPOSITITF DE PRISE D'EMPREINTE SOUS PRESSION CONSTANTE

La présente invention concerne le domaine de la chirurgie dentaire

La présente invention concerne plus précisément un dispositif de prise d'empreinte de dents humaines en art dentaire.

Avant de décrire en détail l'invention elle même, et les progrès qu'elle apporte dans le domaine de la prise d'empreinte, il convient de rappeler les procédés couramment employés pour prendre une empreinte du système manducateur.

La technique classique la plus employée , consiste à prendre les empreintes des dents et des muqueuses du système masticateur à l'aide de porte-empreintes perforés ou non perforés ayant la forme approximative d'une arcade (fig I ).

Ces portes empreintes existent en plusieurs tailles , de façon à s'adapter à presque toutes les conformations de cavités buccales .

Ces porte-empreintes sont remplis d'un produit souple , liquide ou pâteux , qui , une fois placé contre les parties à reproduire , passent en quelques secondes ou en quelques minutes , de l'état liquide ou pâteux à l'état souple, semi rigide, ou rigide ; dans les trois derniers états, ils offrent une reproduction exacte en creux des modèles originaux, et offrent l'avantage, dans les états semi rigides ou souples de pouvoir subir une déformation transitoire sans nuire à la qualité de la reproduction.

On classe les pâtes à empreinte en plusieurs grands groupes :
Les plâtres à empreinte de moins en moins employés.
Les hydrocolloïdes réversibles .
Les hydrocolloïdes irréversibles ( les plus employés : type Alginates )
Les thiocols , élastomères de synthèse et silicones

Pour les deux premiers on utilise en général des porte-empreintes non perforés, pour les deux derniers , des porte-empreintes perforés.

Les techniques de prise d'empreintes employant ces porte empreintes et ces produits ont néanmoins certains inconvénients et certaines limites , et le but de notre invention sera de repousser de façon très sensible ces limites en améliorant de façon très nette la qualité de l'empreinte.

L'emploi des empreintes au plâtre et aux hydrocolloïdes réversibles a été rapidement abandonné face aux deux derniers groupes que sont les alginates et les silicones ou élastomères de synthèse permettant un emploi plus aisé et plus rapide ;néanmoins l'échec est fréquent avec ces types d'empreinte ,et le praticien exigeant est journellement en bute avec des problèmes de mauvaises définitions d'empreinte.

Les causes d'échec sont de natures multiples .

Quand on désire prendre l'empreinte d'une forme quelle qu'elle soit , il est capital que le matériau à empreinte utilisé recouvre le plus complètement possible tous les reliefs de cette forme; or il arrive que par le jeu de l'air, de l'eau, de la salive, du sang, de la pression sanguine , ou du recouvrement mucco-gingival des zones cervicales , certaines zones de la form considérée soient occultées au matériau d'empreinte .

Pour palier à ce genre d'inconvénients on a employéplusieurs procédés:
On peut déposer préalablement à la prise d'empreinte générale, du matériau d'empreinte sur les zones peu accessibles ou susceptibles d'être mal alimentées , avec une seringue à embout fin remplie de matériau à empreinte liquide .

On peut faire une empreinte en deux étapes, c'est le cas des élastomères et silicones où l'on prend une empreinte dite "primaire" avec un porte empreinte perforé classique et une pâte à empreinte "lourde".

Cette empreinte sera un approche la plus fidèle possible de l'empreinte finale, et servira en quelque sorte d'ébauche, de porte empreinte individualisé , à la seconde empreinte faite avec de la pâte à empreinte fluide placée dans la première et repositionnée sur le modèle dont on veut prendre l'empreinte exacte .

Cette dernière technique, la plus fidèle à ce jour, a néanmoins ses limites .

La force exercée par la main de l'opérateur sur le porte empreinte se répartit sur toute la surface de la forme dont on désire prendre l'empreinte selon la formule $P = \frac{F}{S}$ , F étant la force exercée par la main de l'opérateur, S la surface de la zone dont on désire l'empreinte en creux et P la pression nécessaire à la bonne répartition de la pâte à empreinte sur toute la surface de cette zone ; or P, la pression , ne s'exerce que pendant la durée de temps où le porte empreinte ne bute pas sur les reliefs , soit de la forme elle même, soit des reliefs qui l'entourent .

Au moment où le porte empreinte bute sur un obstacle, la pression tombe à zéro, la pâte fluide ne fuse plus, mais il reste néanmoins de quelques secondes à quelques minutes à la pâtepour finir sa prise.

C'est exactement à ce stade de l'empreinte que peuvent intervenir certains éléments risquant de compromettre la fidélité du résultat final.

Un petit saignement en bordure de la préparation dont on désire tous les détails , va repousser la pâte fluide du fait de la pression sanguine , et provoquer un manque .

La muqueuse rétractée pendant la poussée de départ va avoir tendance à reprendre sa place quand la pression va retomber, et va de ce fait repousser la pâte à empreinte encore fluide occultant ainsi certaines zones sous-gingivales pourtant capitales à la bonne définition de l'empreinte cervicale.

De la salive va venir s'insérer entre la préparation et la pâte fluide compromettant la fidélité de l'empreinte .

Un effet de pompage dû au fait que l'opérateur a exercé lors de la mise en place de l'empreinte une pression trop importante ; lorsqu'il relâche cette pression ou la diminue avant la prise en masse de la pâte fluide , on va assister à un repompage de pâte fluide dans les zones de surpressions initiales,volume de pâte qui fera défaut dans les zones cervicales .

Pour rémédier à ces inconvénients ,il conviendrait de faire en sorte que la pression de la pâte à empreinte sur la préparation reste constante pendant toute la durée de la polymérisation ou de la prise en masse de la pâte à empreinte et ne retombe à zéro qu'aprés cette phase .

C'est le but de notre invention qui envisage de coupler la technique classique à un système d'injection de pâte à empreinte.

Ce systèmè d'injection de pâte est incorporé au manche , et permet de contrôler du début de la prise d'empreinte, jusqu'à la prise en masse finale du produit à empreinte la pression exercée sur la forme des préparations à enregistrer .

C'est la combinaison du porte empreinte avec ce système d'injection de pâte qui constitue le pôle principal de l'invention en améliorant de façon considérable la précision de l'empreinte finale .

Les caractéristiques et avantages de la présente invention apparaîtront à la lecture de la description détaillée qui va suivre et en regard des dessins annexés , donnés à titre d'exemple, non limitatifs , et sur lesquels :

La figure I représente une vue schématique du porte empreinte comportant une partie recevant la masse du matériau à empreinte sur laquelle s'insère un réservoir de forme cylindrique dans lequel circule un piston permettant de pousser la pâte à empreinte à travers le porte empreinte.

La figure 2 représente une vue schématique de l'intérieur du porte empreinte sur laquelle on aperçoit l'orifice d'injection de la pâte,et le manche du porte empreinte qui contient le système d'injection .

La figure 3 est une vue en coupe schématique faite suivant le plan indiqué en pointillé sur la figure 2 : cette coupe permet de visualiser le système d'injection intégré au manche.

La figure 4 est une vue schématique des pistons pouvant circuler dans le manche du porte empreinte.

Un de ces piston : A : est composé d'une tige munie à une extémité d'un cylindre de diamètre correspondant au diamètre interne de la lumière du manche, et à son autre extémité d'un poussoir servant à le faire fonctionner .

L'autre piston : B : est constitué des mêmes éléments que le A , mais comporte en plus, à l'extémité du cylindre servant de piston un tube creux de diamètre extérieur correspondant au diamètre de la lumière située au milieu de la partie interne du porte empreinte; ce tube coupé en biseau tranchant servira d'emporte pièce, et sera ouvert sur toute sa longueur pour pouvoir en dégager les carottes après usage.

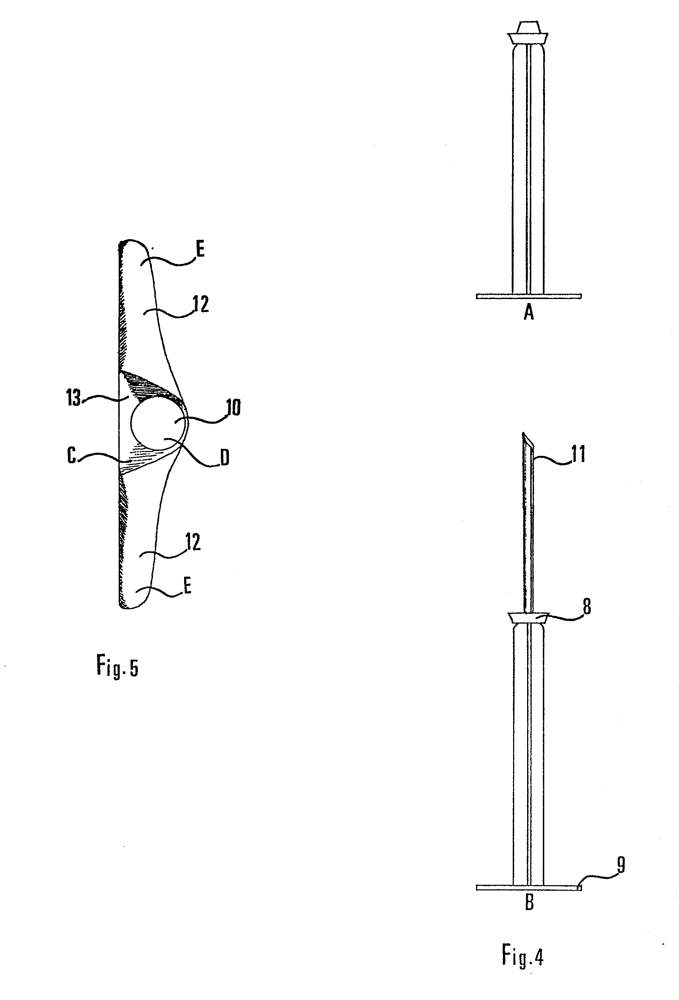

La figure 5 est une vue schématique du manche du porte empreinte montrant l'orifice de remplissage du réservoir D , des deux ailettes de préhension E , et l'arête droite permettant une meilleure introduction de la pâte à empreinte C.

Le porte empreinte lui même sera perforé ou non perforé suivant le type de matériau à empreinte utilisé .

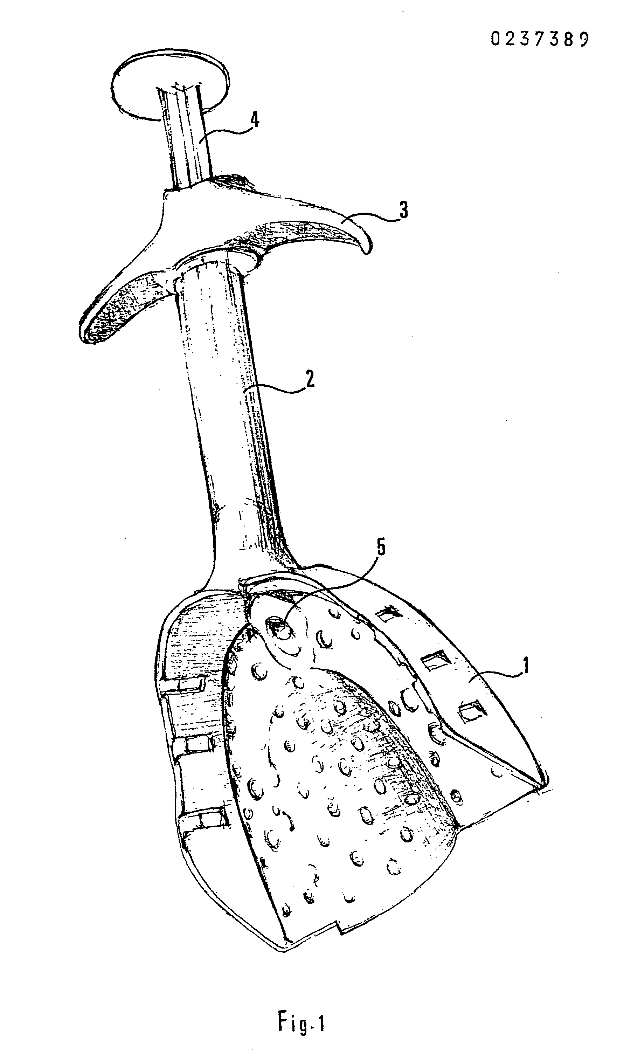

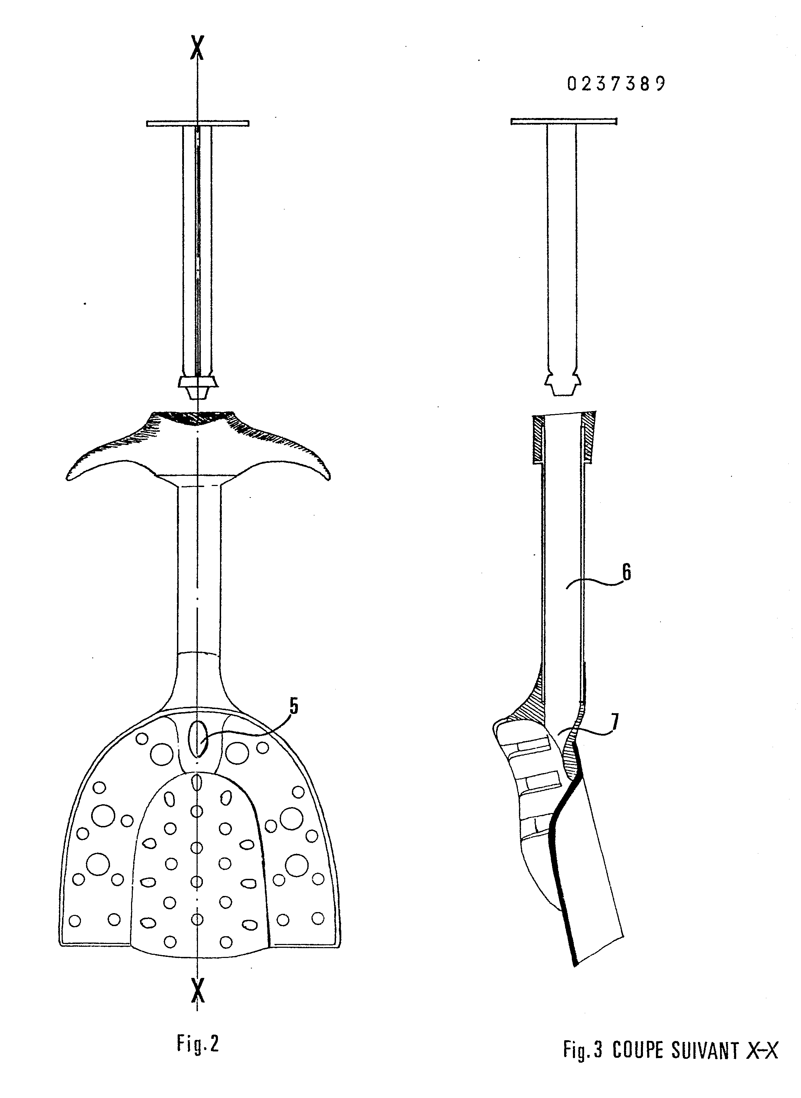

Le porte empreinte , selon une autre caractéristique avantageuse de l'invention , a une forme qui se rapproche le plus fidèlement de la forme en négatif de l'objet ou de la préparation dont on veut prendre l'empreinte, il en existera donc de différentes grandeurs , cette partie comporte en son centre un trou débouchant dans l'intrados du porte empreinte ( Fig 2 ), et abouchant à l'intérieur d'un tube creux légèrement conique vers l'extérieur , et donnant lui même sur un cylindre de diamètre plus important ( Fig 3 ) .

Ce cylindre de diamètre plus important comporte à son extrémité deux ergots curvilignes permettant à l'index et au majeur de la main de l'operateur, une préhension correcte de cette partie du porte empreinte( Fig I no2et3)

Une partie mobile composée d'une tige comportant à une extrémité un piston dont le diamètre extérieur est calculé pour circuler à frottement doux dans le cylindre de la partie du manche du porte empreinte précédemment décrite, et à son autre extrémité par une partie plate, permettant d'exercer une pression convenable avec la paume de la main du fait de sa bonne adaptation anatomique (Fig 4 A)

On utilisera des porte empreintes perforés dans le cas d'empreintes utilisant des silicones , thiocols ou élastomères de synthèse; des porte empreintes non perforés aux parois en écaille de poisson et bords rétentifs pour les hydrocolloïdes irréversibles genre alginates .

Il est bien évident que d'autres techniques de prise d'empreinte ou d'autres formes de porte empreintes peuvent être utilisés dans le cadre de la présente invention .

Pour mieux comprendre l'intérêt de la présente invention et ses principales caractéristiques, nous allons décrire une prise d'empreinte aux élastomères de synthèse .

Dans ce cas on utilise des porte empreintes perforés , et la prise d'empreinte se fait en deux étapes .

La pâte à empreinte primaire se fait à l'aide d'élastomères ( pâte lourde ) que l'on place dans le porte empreinte spécial (Fig I ) ; on le place contre les dents, et on attend qu'il fasse sa prise; dans cette phase tout se passe de façon classique, seule change la conception du porte empreinte.

Quand la pâte lourde a fait sa prise, on la retire de la bouche, et on introduit dans l'orifice du réservoir situé dans le manche (Fig 3 - Fig 5 D ) le piston spécial ( Fig 4 B ) muni de l'emporte pièce : cette phase a pour objet de déboucher l'ouverture de la lumière du système d'injection à travers la pâte à empreinte primaire; on retire alors ce piston duquel on dégagera facilement la carotte de pâte à empreinte qu'il contient afin de le faire servir à nouveau .

Le porte empreinte est prêt pour la prise d'empreinte secondaire .

A ce stade, on place de manière classique la pâte fluide d'élastomère de synthèse dans l'empreinte primaire de façon uniforme à l'aide d'une spatule , mais en plus , selon la présente invention, on remplira simultanément le réservoir situé dans le manche (Fig 5 -D ) la bouche du manche réservoir (Fig 5 ) comporte une arête droite ( Fig 5 - C ) facilitant l'introduction du matériau liquide avec une spatule; cette arête permettant de dégager par raclage le matériau liquide de la spatule afin de le faire couler dans le réservoir pour le remplir .

A ce stade on place le piston ( Fig 4 A ) dans son logement et on replace l'empreinte en bouche.

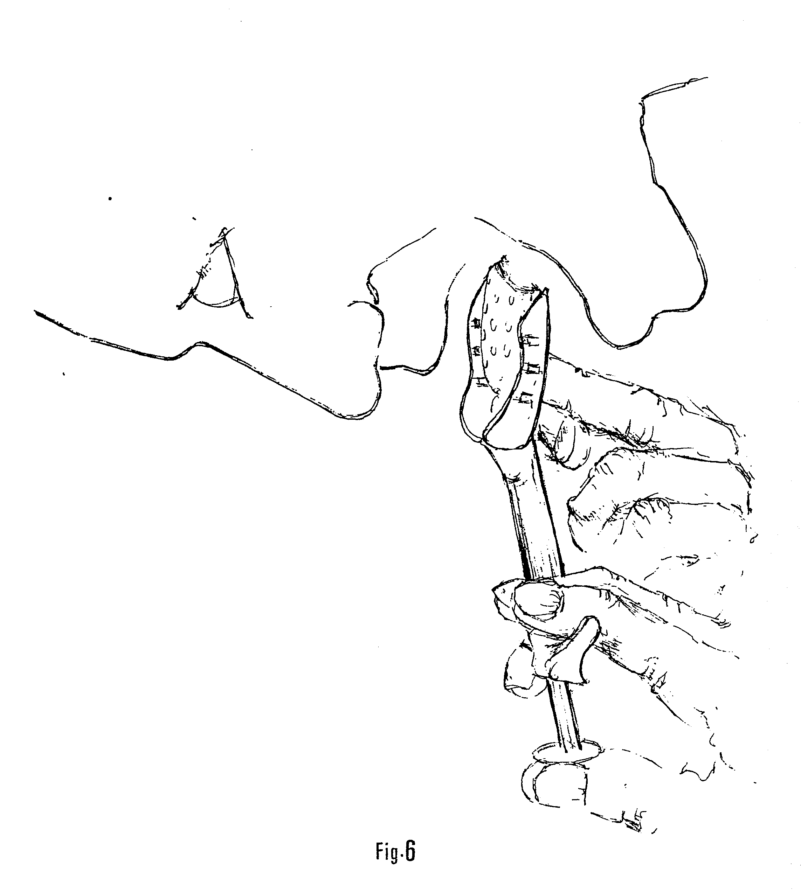

Il suffira alors de maintenir l'empreinte en place avec la main gauche , en exerçant un pression modérée, et avec la main droite, de procéder à l'injection de matériau fluide dans l'empreinte grâce au piston situé dans le manche ( Fig 6 ) .

On injectera très lentement de façon à se réserver toujours une quantité de produit suffisante pour que la polymérisation du matériau ait lieu avant d'avoir terminé complètement l'injection ; ceci afin d'être certain d'avoir effectué une prise d'empreinte sous pression constante .

Le nettoyage du porte empreinte s'effectuera de façon classique

Ces porte empreintes à systéme d'injection de pâte incorporée peuvent être réalisés en matière plastique, de préférence semi-rigide , par injection .

Dans une variante à la présente invention , il est possible de remplacer l'action du piston ( Fig 4-A ) par connexion du réservoir de pâte à empreinte (6) à une réserve d'air ou autre élément sous pression préalable .

Dans le cas d'utilisation des hydrocolloïdes irréversibles , on utilisera des portes empreintes non perforés comme indiqués précedemment, le piston de la Fig 4 - B ne servira pas , puisque l'on ne fait pas , avec cette technique,de prise d'empreinte primaire, on remplira dans ce cas le porte empreinte et le réservoir simultanément avec de la pâte à empreinte , en une seule opération , et on procèdera à l'injection de façon plus rapide , le produit prenant en masse plus rapidemant .

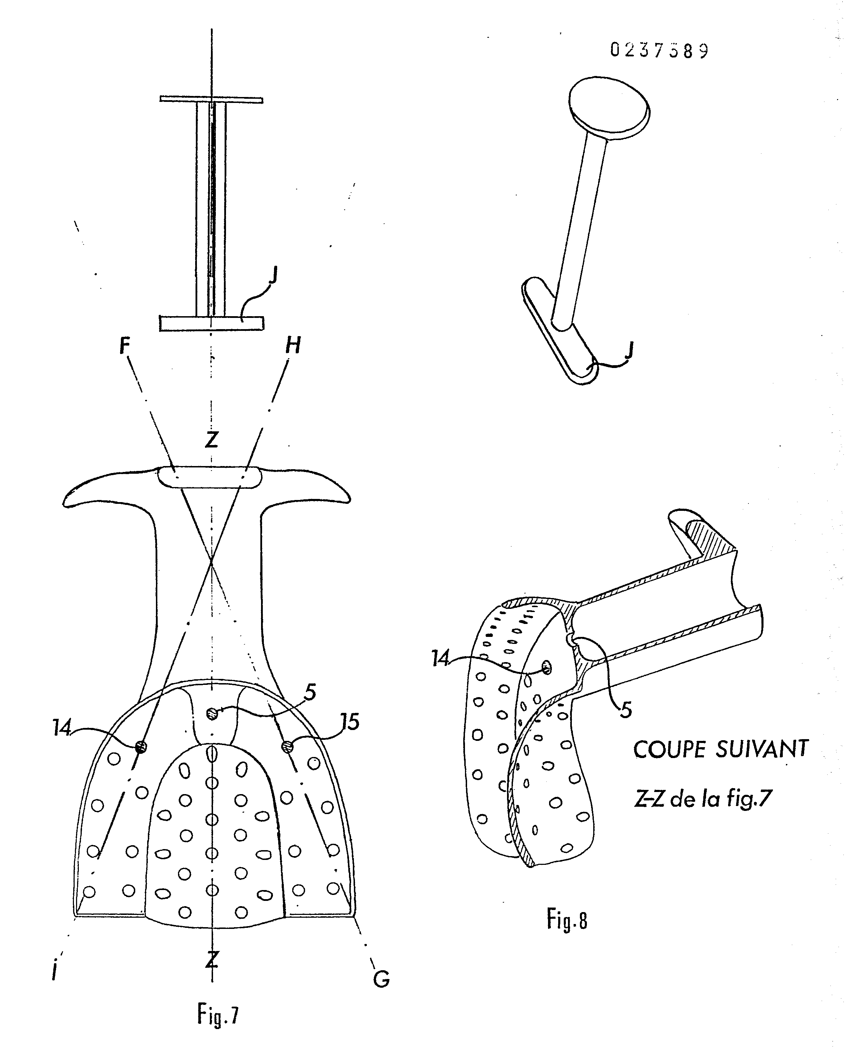

Afin de compléter les indications d'utilisation d'un tel procédé , en particulier au cours de prises d'empreintes d'éléments de bridges important où il est souhaitable d'obtenir une meilleure répartition de la pression exercée par le système d'injection de la pate à empreinte sur tous les piliers du futur bridge , ou de la future prothèse , on agrandi le réservoir du système d'injection afin d'y aménager plusieurs orifices d'injection au lieu d'un . Sur la figure 7 nous en avons par exemple trois no5-l4-l5 . Les deux trous d'injection supplémentaires se trouvant de part et d'autre du trou initial no5 figure 7

Les axes de ces orifices d'injection se trouvant dans l'axe d'ouverture du système d'injection , ( Figure 7 , axe F-G pour l'orifice no5 ,axe H-I pour l'orifice no14 et axe Z-Z pour l'orifice no5 )ceci de manière à pouvoir , comme dans le cas précédent , réouvrir la lumière de ces trous d'injection après la prise de l'empreinte primaire aux élastomères lourds au moyen de la tige Fig.10 comportant un emporte pièce l6 , sorte de tube creux ouvert sur toute sa longueur de manière à dégager la carotte formée lors de son passage dans les lumières du porte-empreinte . Fig.l0K (vue de face) .

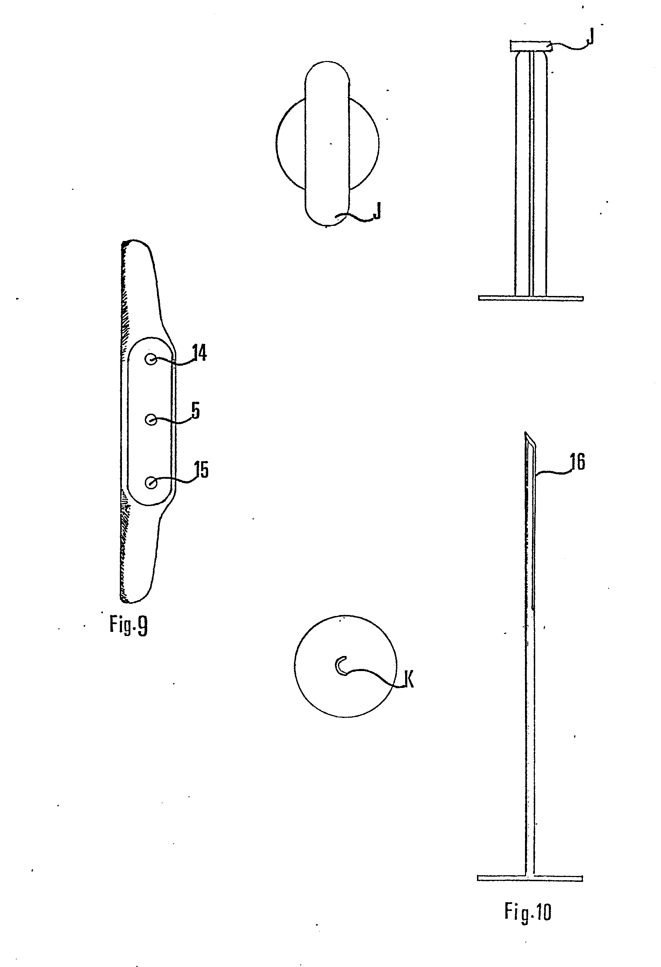

Cet emporte-pièce est un peu différent du précédent qui comportait un piston de guidage . Ici , il faudra introduire succésivement cet instrument dans chaque lumière aménagée au fond du réservoir (Fig.9 no14, 5,l5 ) communiquant avec l'intérieur du porte-empreinte Fig.7

Une coupe suivant un axe Z-Z Fig.7 permet de montrer l'orifice no5 au centre du fond du réservoir et l'orifice no14 abouchant au fond du porte-empreinte.

On remarque également que l'angle formé par l'axe du réservoir et l'axe du port-empreinte est plus fermé que dans le cas où le système ne comporte qu'un seul trou médian d'injection , ceci afin de permettre un abouchement des injecteurs no14etl5 approximativement au niveau des prémolaires qui représentent l'endroit médian de l'hémi-arcade où devra s'exercer au mieux la pression .

Il sera possible d'ouvrir un ,deux ou trois trous d'injection , en fonction du nombre de piliers et de leur position sur l'arcade dont on désirera prendre l'empreinte .

Le piston servant a l'injection de la pate à empreinte "J" Fig.7-8-l0 est adapté à la forme ici ovoide de la partie interne du réservoir . Le reste de la technique et du mode d'emploi sont identique aux précédents développement , puisque le principe est le même .

## Revendications

l. Le dispositif de prise d'empreinte dentaire sous pression constante caractérisé en ce qu'il comporte un système d'injection de pâte à empreinte incorporé au manche du type comprenant un porte empreinte (l) muni d'un manche creux (2) comportant un piston coulissant dans ce manche creux formant réservoir de pâte à empreinte et débouchant au milieu de l'intrados du porte empreinte par un orifice d'injection (5) .

2. Dispositif selon revendication l caractérisé en ce que le réservoir de mise sous pression de la pâte à empreinte est solidaire du porte empreinte .

3. Dispositif selon l'une quelconque des revendications précédentes caractérisé en ce que les moyens d'injection de pâte sont constitués de deux pistons de diamètre convenant au diamètre intérieur du manche creux (l0) et solidaires d'un manche (9).

4. Dispositif selon revendications précédentes caractérisé en ce que l'un des pistons comporte une tige à son extrémité, formée d'un tube creux (ll) ouvert sur toute sa longueur et coupé en biseau , d'un diamètre convenant au diamètre interne du canal d'injection (7) situé à l'extrémité interne du réservoir du manche du porte empreinte et débouchant dans l'intrados de celui-ci (5); le tube creux est fixé au centre du piston qui lui sert de guidage afin de circuler aisément dans la lumière de l'intrados du porte empreinte.

5. Dispositif selon les revendications précédentes caractérisé en ce que le deuxième piston ne comporte pas de tige métallique à son extrémité , sa course étant limitée à la longueur du réservoir cylindrique (6).

6. Dispositif selon les revendications précédentes caractérisé en ce que le porte empreinte comporte au niveau de l'orifice de remplissage du réservoir, une sorte d'entonnoir comportant une arête vive et droite (I3).

7. Dispositif selon revendications précédentes caractérisé par le fait que dans une réalisation possible de la même invention , la mise sous pression du réservoir du porte empreinte peut être réalisée par connexion de ce dernier à une source de pression préalable .

8. Dispositif selon revendications précédentes caractérisé en ce que le manche réservoir du porte empreinte comporte deux ergots (I2) s'adaptant anatomiquement à la main de l'opérateur .

9. Dispositif selon revendication I caractéristique en ce qu'il comporte plusieurs orifices d'injection de pate à empreinte .

I0. Dispositif selon revendication précédente caractérisé par le fait que l'emporte-pièce permettant de repercer les lumières des injecteurs n'est pas guidé par un piston , mais solidaire d'un axe de même diamètre que l'emporte-pièce Fig.I0 noI6 ,afin de permettre son introduction dans plusieurs trous d'injection divergents situés au fond du réservoir (Fig.7 axes F-G,Z-Z,etH-I)

II.Dispositif selon revendications I-9-I0 caractérisé par le fait qu'il est possible de diriger la pression de la pâte à empreinte sur une zone préférentielle de l'arcade dentaire par l'ouverture d'un ou plusieurs injecteurs .

0237389

Fig.1

X

0237389

5

6

7

Fig.2

Fig.3 COUPE SUIVANT X-X

0237389

Fig. 5

Fig. 4

Fig.6

0237389

F  H

Z

J

14

5

15

i

Z

G

Fig.7

14

5

COUPE SUIVANT

Z-Z de la fig.7

Fig.8

0237389

Fig.9

Fig.10

14

5

15

16

J

J

K

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CA-A-1 118 242 (LOCOCO)<br>* Page 1, lignes 1-4; page 5, lignes 16-26; figures 1-3 *<br>--- | 1,2 | A 61 C 9/00 |
| X | FR-A-2 552 658 (BESSON et al.)<br><br>* Revendications 1-4; figures 1-3 *<br>--- | 1,2,5-9 | |
| A | US-A-4 382 785 (LOCOCO)<br><br>* Revendications 1-3; figures 1,2 *<br>--- | 1,2,5-7,9-11 | |
| A | US-A-2 129 987 (BERKSON)<br>* Figure 1 *<br>--- | 7 | |
| A | US-A-2 349 607 (BERGER)<br>* Figure 1 *<br>----- | 8 | DOMAINES TECHNIQUES RECHERCHES (Int. Cl.4)<br><br>A 61 C |

Le présent rapport de recherche a été établi pour toutes les revendications

| Lieu de la recherche<br>LA HAYE | Date d'achèvement de la recherche<br>27-04-1987 | Examinateur<br>RAKOWICZ,J.M. |
|---|---|---|